# EUROPÄISCHE PATENTANMELDUNG

(11) **EP 3 151 217 A1**
(43) Veröffentlichungstag der Anmeldung: **05.04.2017**
(21) Anmeldenummer: 15188208.1
(22) Anmeldetag: 02.10.2015
(51) Int. Cl.: G09B 25/02, G05B 19/418

(54) **OPERATOR-TRAINING-SYSTEM**

(71) Anmelder: Siemens Aktiengesellschaft, 80333 München (DE)
(72) Erfinder: Lutz, Benjamin, 76327 Pfinztal (DE)

(57) **Zusammenfassung**

Die Erfindung betrifft ein Operator-Training-System (21) zur Schulung eines Operators im Hinblick auf das Bedienen und Beobachten eines mittels einer Automatisierungseinrichtung (1) zu steuernden technischen Prozesses, wobei die Automatisierungseinrichtung (1) Operator-Stationen (12, 13), Automatisierungsgeräte (3, 4) und ein Engineering-System (11) zum Erzeugen von Prozessabbildern und Anlagenbildern für die Operator-Stationen (12, 13) und zum Erzeugen von Prozessabbildern und Steuerprogrammen für die Automatisierungsgeräte (2, 3) umfasst. Es werden Maßnahmen vorgeschlagen, mittels derer der Bedarf an Hardware und Netzinfrastruktur für das Operator-Training-System (21) verringert wird.

## Beschreibung

Die Erfindung betrifft ein Operator-Training-System zur Schulung eines Operators im Hinblick auf das Bedienen und Beobachten eines mittels einer Automatisierungseinrichtung zu steuernden technischen Prozesses, wobei die Automatisierungseinrichtung Operator-Stationen, Automatisierungsgeräte und ein Engineering-System zum Erzeugen von Prozessabbildern und Anlagenbildern für die Operator-Stationen und zum Erzeugen von Prozessabbildern und Steuerprogrammen für die Automatisierungsgeräte umfasst. Ferner betrifft die Erfindung ein Engineering-System zum Zusammenführen von Projektierungsdaten einer Automatisierungseinrichtung für ein derartiges Operator-Training-System.

Operatoren bedienen und beobachten einen mittels einer Automatisierungseinrichtung bzw. eines Leitsystems zu steuernden technischen Prozess gewöhnlich erst dann, wenn die Operatoren eine geeignete Schulung absolviert haben. Eine derartige Schulung wird im Rahmen eines so genannten Operator Trainings absolviert, wobei während dieses Trainings neben dem routinemäßigen Betrieb der Automatisierungseinrichtung auch diverse Störfälle geübt werden. Für dieses Training werden Operator-Training-Systeme eingesetzt, die weitgehend der realen Automatisierungseinrichtung entsprechen, mit der Ausnahme, dass der unterlagerte Prozess mittels eines Simulators eines Simulations-Servers simuliert und virtualisiert wird. Unter dem unterlagerten Prozess wird in diesem Zusammenhang die Prozesssteuerung der Feldebene der Automatisierungseinrichtung verstanden. Diese Feldebene umfasst mehrere über einen Feldbus verbundene Feldgeräte, wobei so genannte Anschaltungen einen Informationsaustausch zwischen dem Simulator und den Automatisierungsgeräten der Steuerungsebene dieser Automatisierungseinrichtung ermöglichen.

Aufgrund dessen, dass das Operator Training System weitgehend der realen Automatisierungseinrichtung entspricht, weist das Operator Training System eine ähnliche Komplexität im Hinblick auf den Aufbau und die Konfiguration dieser Automatisierungseinrichtung auf. Die Anschaffungskosten für ein derartiges Operator-Training-System sind entsprechend hoch und darüber hinaus gestaltet sich auch die Pflege und Wartung des Operator Training Systems zeitintensiv.

Der Erfindung liegt daher die Aufgabe zugrunde, ein Operator-Training-System der eingangs genannten Art mit einem verringerten Bedarf an Hardware und Netzinfrastruktur zu schaffen. Darüber hinaus ist ein Engineering-System anzugeben, welches zum Zusammenführen von Projektierungsdaten einer Automatisierungseinrichtung für ein derartiges Operator-Training-System geeignet ist.

Diese Aufgabe wird im Hinblick auf das Operator-Training-System durch die im kennzeichenenden Teil des Anspruchs 1 angegebenen, bezüglich des Engineering-Systems durch die im Anspruch 3 angegebenen Maßnahmen gelöst.

Vorteilhaft ist, dass durch das Operator-Training-System eine Schulung von Operatoren einfacher und kostengünstiger erfolgen kann. Die Erfindung geht von der Idee aus, die auf Automatisierungsgeräten und auf Operator Stationen verteilten Projektierungsdaten einer Automatisierungseinrichtung für ein Operator-Training-System effizient zusammenzuführen, wobei die Zusammenführung automatisch durch ein Engineering-System der Automatisierungseinrichtung erfolgt. Ein derartiges Operator-Training-System zeichnet sich durch einen minimalen Bedarf an Hardware und Netzinfrastruktur aus, wodurch dieses Operator-Training-System ein "Lean" Operator-Training-System (OTS) bzw. ein "spartanisches" OTS repräsentiert.

In einer Ausgestaltung der Erfindung ist vorgesehen, dass die Zugriffs-Adressen zusätzlich zur System-Id der Operator-Training-OS-Station jeweils eine Objekt-Id für das Prozessobjekt des jeweiligen Prozessabbildes und eine Member-Id für die Ein- und Ausgänge des jeweiligen Prozessabbildes aufweisen. Dadurch wird die Zusammenführung der Prozessbilder in der Operator-Training-OS-Station vereinfacht, da für einen Zugriff auf die Prozessobjekte lediglich die Zugriffs-Adressen für die Operator-Stationen durch die System-Id der Operator-Training-OS-Station zu ersetzen sind.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen in einer vereinfachten Form
- Figur 1: ein Operator-Training-System,
- Figur 2: eine Zusammenführung von Operator-Stationen für eine Operator-Training-System,
- Figur 3: die Darstellung einer Gerätehierarchie und
- Figur 4: eine Automatisierungseinrichtung mit einem Operator-Training-System.

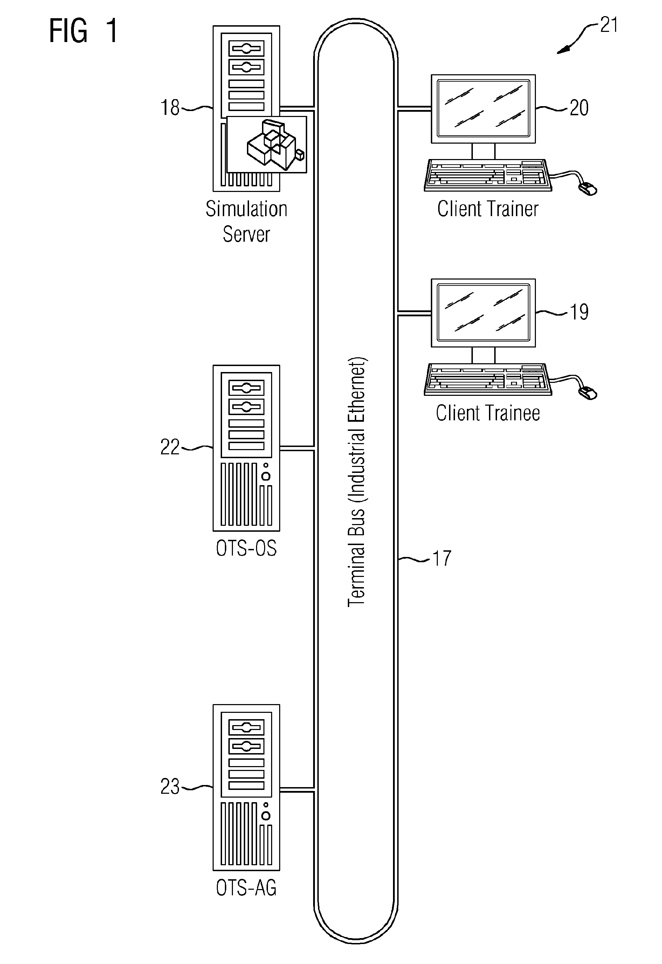

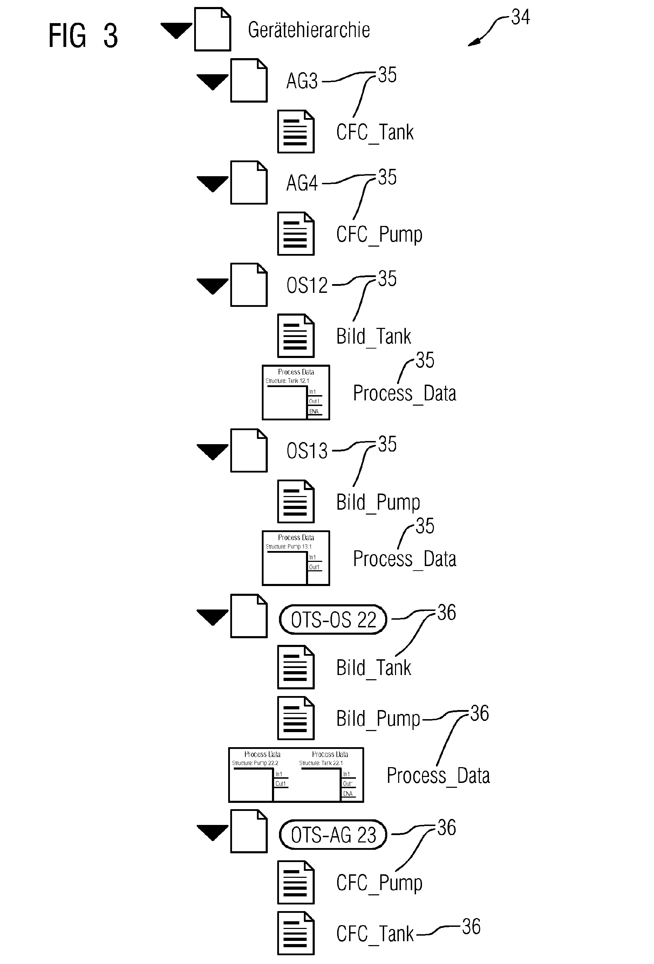

Die in den Figuren 1 bis 4 dargestellten gleichen Teile sind mit gleichen Bezugszeichen versehen.

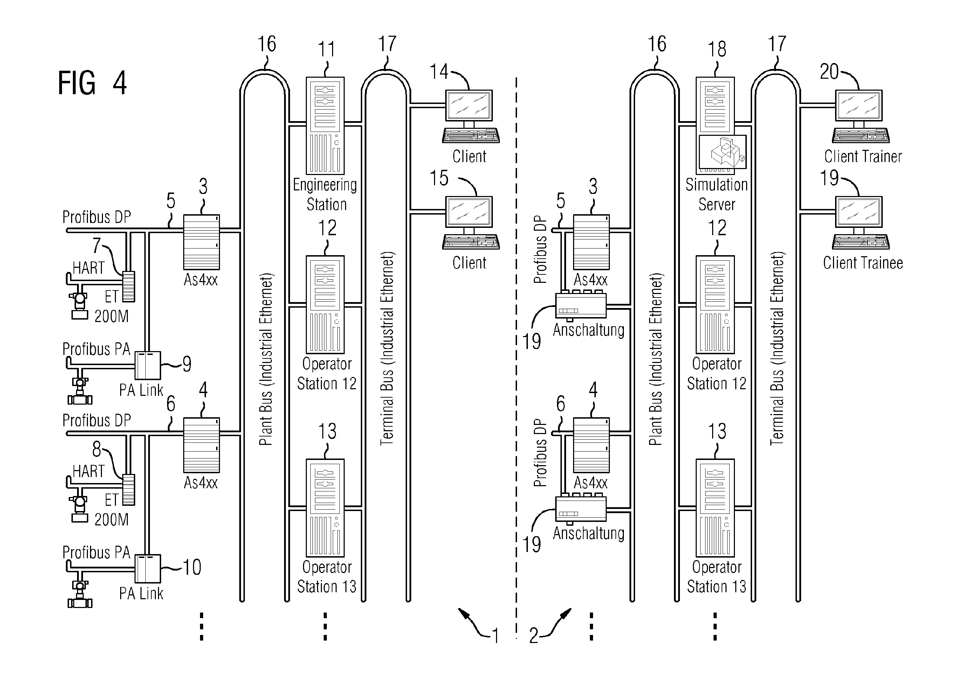

Es wird zunächst auf Figur 4 verwiesen, in welcher Bestandteile einer an sich bekannten Automatisierungseinrichtung 1 und eines Operator-Training-Systems 2 dargestellt sind. Die Automatisierungseinrichtung 1 weist Automatisierungsgeräte 3, 4 auf, die jeweils über einen Feldbus 5, 6 mit einer dezentralen Peripherie 7, 8 und einem Buskoppler 9, 10 verbunden sind. Jede dieser dezentralen Peripherien 7, 8 ist mit einer Interface-Baugruppe und mit einer Vielzahl von Prozesseingabe- und Prozessausgabe-Baugruppen versehen, wobei an die jeweiligen Prozesseingabe-Baugruppen Sensoren und an die jeweiligen Prozessausgabe-Baugruppen Aktuatoren angeschlossen sind. Ferner ist die Automatisierungseinrichtung 1 mit einem Engineering-System 11 zur Projektierung dieser Automatisierungseinrichtung 1 und mit Operator-Stationen 12, 13 zur Prozessführung 12, 13 versehen, wobei ein Anwender mittels Clients 14, 15 auf die Projektierungs-Software des Engineering-Systems 1 und auf die Bedien- und Beobachtungs-Software der Operator-Stationen 12, 13 lesend oder schreibend zugreifen kann. Die Operator-Stationen 12, 13 ermöglichen dem Operator eine komfortable und sichere Prozessführung; er kann bei Bedarf in den Prozessablauf steuernd eingreifen, was bedeutet, dass der Operator den durch die Automatisierungseinrichtung 1 zu steuernden technischen Prozess bedienen und beobachten kann.

Über geeignete Netzwerke 16, 17 sind die Clients 14, 15, das Engineering-System 11, die Operator-Stationen 12, 13 und die Automatisierungsgeräte 3, 4 miteinander verbunden. Durch das Engineering-System 11 im Rahmen der Projektierung erzeugte Projektierungsdaten umfassen Daten im Hinblick auf die Hardware 3, 4, 7, 8, 9, 10, 12, 13, die Netzwerke 5, 6, 16, 17, die Kommunikation, die Feldgeräteparametrierung und die Steuerprogramme für die Automatisierungsgeräte 3, 4. Das Engineering-System 11 übermittelt einerseits den Operator-Stationen 12, 13 die für diese Stationen 12, 13 vorgesehenen Projektierungsdaten, welche Anlagenbilder und Operator-Sation-Prozessabbilder umfassen, und andererseits den Automatisierungsgeräten 3, 4 die für diese Automatisierungsgeräte 3, 4 vorgesehenen Projektierungsdaten, welche AS-Prozessabbilder sowie CFC- und SFC-Steuerprogramme umfassen.

Ehe der Operator den zu steuernden technischen Prozess führt bzw. bedient und beobachtet, absolviert dieser eine geeignete Schulung. Zur Schulung des Operators ist das Operator-Training-System 2 vorgesehen, welches weitgehend die Automatisierungseinrichtung 1 umfasst. Im vorliegenden Ausführungsbeispiel umfasst das Operator-Training-System 2 - im Folgenden mit OTS 2 bezeichnet - die Automatisierungsgeräte 3, 4, die Operator-Stationen 12, 13, sowie die Kommunikationsnetze 5, 6, 16, 17 der Automatisierungseinrichtung 1. Die unterlagerte Prozesssteuerung, welche die dezentralen Peripherien 7, 8 mit angeschlossenen Sensoren und Aktuatoren sowie die Buskoppler 9, 10 umfasst, ist dagegen nicht Bestandteil des OTS 2. Diese unterlagerte Prozesssteuerung simuliert bzw. emuliert eine entsprechend ausgebildete Simulations-Software eines Simulations-Server 18 und geeignet ausgebildete Anschaltungen 19, welche für den Simulationsbetrieb einen Informationsaustausch zwischen dem Simulations-Server 18 und den Automatisierungsgeräten 3, 4 ermöglichen. Im Rahmen der Schulung mittels des OTS 2 bedient und beobachtet der Operator den simulierten technischen Prozess über einen Client 19, wobei zusätzlich zum "routinemäßigen Betrieb" auch diverse simulierte Störfälle über einen weiteren Client 20 aktiviert werden können, auf die der Operator mittels geeigneter Maßnahmen reagieren muss.

Um im Hinblick auf ein Operator-Training-System auf die Automatisierungsgeräte 3, 4, auf die Operator-Stationen 12, 13 sowie auf die Netzwerke 5, 6, 16 verzichten zu können, was einen verringerten Bedarf an Hardware und Netzinfrastruktur bedeutet, ist ein Operator-Training-System 21 - im Folgenden als OTS 21 bezeichnet (Figur 1) - neben dem Simulations-Server 18 mit einer Operator-Training-Automatisierungs-Station 23 - im Folgenden als OTS-AG 23 bezeichnet - versehen, welche die Funktions-und Wirkungsweise der Automatisierungsgeräte 3, 4 der Automatisierungseinrichtung 1 emuliert bzw. nachbildet, sowie mit einer Operator-Training-Operator-Station 22 - im Folgenden als OTS-OS 22 bezeichnet -, welche die Funktions-und Wirkungsweise der Operator-Stationen 12, 13 der Automatisierungseinrichtung 1 emuliert bzw. nachbildet. Mittels des Engineering-Systems 11 werden dazu die Operator-Stationen 12, 13 in der OTS-OS 22 und die Automatisierungsgeräte 3, 4 in die OTS-AG 23 "zusammengeführt".

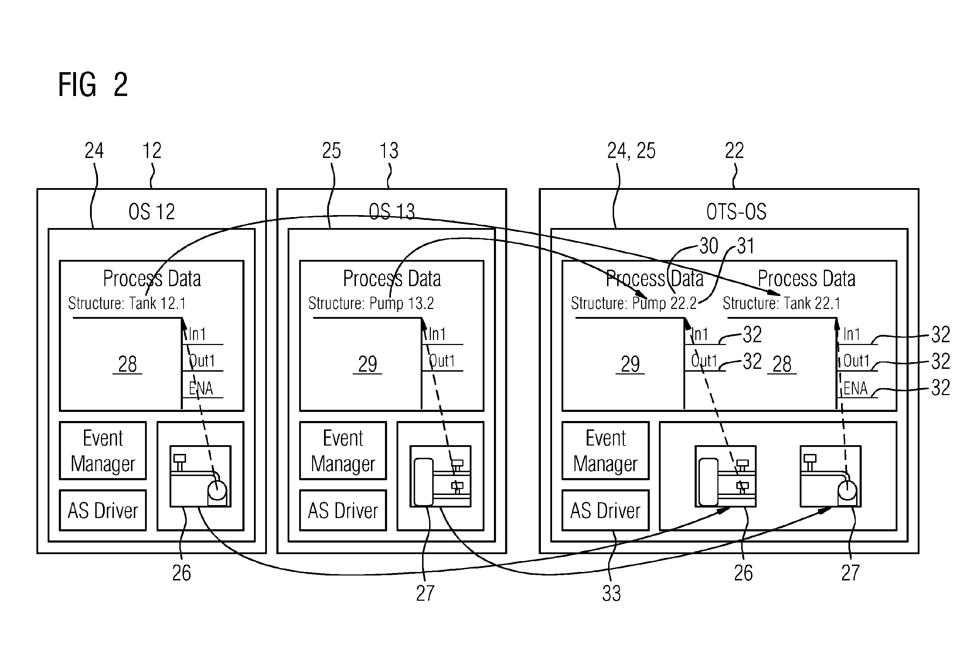

Im Folgenden wird auf Figur 2 verwiesen, in welcher in vereinfachter Darstellung die "Zusammenführung" der Operator-Stationen 12, 13 für die OTS 21 (Figur 1) veranschaulicht ist. Mittels des Engineering-Systems 11 werden nach einer geeigneten Menüeingabe automatisiert die Operator-Stationen 12, 13 der Automatisierungseinrichtung 1 für das OTS 21 "zusammengeführt", indem das Engineering-System 11 einerseits eine Kopie von Prozessabbildern 24, 25 sowie eine Kopie von Anlagenbildern 26, 27 der Operator-Stationen 12, 13 in die OTS-OS 22 hinterlegt. Im Hinblick auf die Prozessabbilder 24, 25 weist das Engineering-System 11 den Prozessobjekten 28, 29 der Prozessabbilder 24, 25 eine neue Adresse zu, die eine System-Id 30 bzw. Kennung der OTS-OS 22 umfasst. Ferner ergänzt das Engineering-System 11 diese Adresse um eine prozessobjektspezifische Objekt-Id 31 und um eine Member-Id, welche die Ein-/Ausgänge 32 der Prozessobjekte 28, 29 spezifizieren. Im vorliegenden Ausführungsbeispiel lautet daher während der Schulung die Zugriffs-Adresse auf das Prozessobjekt 28 in der OTS 22 "22.1", dagegen während der Prozesssteuerung "12.1". Entsprechend lautet die Zugriffsadresse auf das Prozessobjekt 29 während der Schulung "22.2", während der Prozesssteuerung dagegen "13.2".

Wie erläutert führt das Engineering-System 11 für die Schulung neben den Prozessabbildern 28, 29 auch die Anlagenbilder 26, 27 auf der OTS-OS 22 für das Bedienen und Beobachten zusammen. In der OTS-OS 22 werden diese Anlagenbilder 26, 27 durch einen Konfigurations-Daten-Service verwaltet. Für den Fall, dass dieser Konfigurations-Daten-Service ein Bild z. B. von der Operator-Station 12 anfordert, wird dieses Bild von einem Konfigurations-Daten-Service der Operator-Station 12 an den Konfigurations-Daten-Service der OTS-OS 22 übergeben. Aufgrund dessen, dass durch die Zusammenführung der Prozessabbilder die System-IDs der Prozessobjekte geändert werden, wird diese Adressierungsänderung auch in den Anlagenbildern durch eine geeignete Referenzierung "nachgezogen", was in der Zeichnung durch gestrichelte Pfeile dargestellt ist. Neben den Prozessabbildern und den Anlagenbildern können in den Operator-Stationen 12, 13 noch weitere Projektierungsdaten (z.B. Textlisten) vorhanden sein, die auf vergleichbare Weise "zusammengeführt" werden können.

Zusätzlich zu der "Zusammenführung" der Operator-Stationen 12, 13 für das OTS 21 werden die Automatisierungsgeräte 3, 4 für das OTS 21 "zusammengeführt", indem das Engineering-System 11 automatisiert eine Kopie der Prozessabbilder der Automatisierungsgeräte 3, 4 sowie der Steuerprogramme (Continuous-Function-Chart-Pläne (CFC), Sequential-Function-Chart-Pläne (SFC) der Automatisierungsgeräte 3, 4 in die OTS-AG 23 hinterlegt. Die OTS-AG 23 verarbeitet im Schulungsbetrieb die geladenen Steuerprogramme und Prozessobjekte, wobei sie die Automatisierungsgeräte 3, 4 emuliert bzw. nachbildet. Mit anderen Worten: sämtliche Pläne (CFCs, SFCs ...) und Prozessobjekte werden in die OTS-AG 23 geladen und anstelle einer realen Automatisierung wird für die OTS-AG 23 eine emulierte (virtuelle) Automatisierung bewerkstelligt. Aufgrund dieser emulierten Automatisierung
- können im Vergleich zu realen Automatisierungen potentiell größere Automatisierungsprogramme durch eine emulierte Automatisierung geladen und ausgeführt werden,
- kann auf die in Figur 4 dargestellten Anschaltungen zur Verbindung von Simulations-Server 18 und Automatisierungsgeräten 3, 4 verzichtet werden, weil der Simulations-Server 18 mit emulierten Automatisierungen direkt kommuniziert,
- wird der Aufbau der OTS 21 deutlich vereinfacht; neben der Einsparung von zahlreichen Automatisierungen kann auch auf den so genannten Anlagenbus 16 (Plant Bus) verzichtet werden.

Das Engineering-System 11 passt die Konfiguration eines Kommunikationstreibers 33 (Figur 2) der OTS-OS 22 entsprechend an, wodurch der Kommunikationstreiber 33 für die Aktualisierung des jeweiligen Prozessabbildes die entsprechenden Prozessobjekte in der emulierten Automatisierung adressieren kann. Das Engineering-System 11 erzeugt im Rahmen eines Übersetzungsprozesses automatisiert und integriert das OTS 21.

Die "Zusammenführung" der Operator-Stationen 12, 13 und der Automatisierungsgeräte 3, 4 zeigt das Engineering-System 11 in einer auf einer Anzeigeeinheit dargestellten Gerätehierarchie 34 an, in welcher zusätzlich zu den Hard- und Software-Komponenten der Automatisierungseinrichtung 1 auch die OTS-OS 22 und die OTS-AG 23 graphisch angezeigt werden. Im vorliegenden Ausführungsbeispiel wird einem Anwender zusätzlich zu den Komponenten-Icons 35 der Automatisierungsgeräte 3, 4, der Operator-Stationen 12, 13, der Steuerprogramme (CFC, SFC) und der Prozess- und der Anlagenbilder auch die Komponenten-Icons 36 der OTS-OS 22, der OTS-AG 23, der Steuerprogramme (CFC, SFC) sowie der Prozess- und Anlagenbilder angezeigt. Ein manuelles Engineering der OTS-OS 22 und der OTS-AG 23 - z. B. eine Zuweisung eines Anlagenbildes oder eines CFC- oder SFC-Plans - wird durch das Engineering-System 11 verhindert, weil die OTS-OS 22 und die OTS-AG 23 nur durch das Engineering-System 11 im Rahmen einer Übersetzung für die OTS 21 "abgefüllt" werden. Diese Sperre wird dem Anwender grafisch angezeigt, beispielsweise durch eine farbliche Kennzeichnung der OTS-OS 22 und der OTS-AG 23. Das Engineering-System 11 stellt ferner für die OTS-OS 22 und die OTS-AG 23 des OTS 21 ein selektives Laden bereit, so dass das OTS 21 ohne die Komponenten der Automatisierungseinrichtung 1 als Einheit geladen werden kann, wodurch auch Ladekonflikte vermieden werden.

## Patentansprüche

1. Operator-Training-System zur Schulung eines Operators im Hinblick auf das Bedienen und Beobachten eines mittels einer Automatisierungseinrichtung (1) zu steuernden technischen Prozesses, wobei die Automatisierungseinrichtung (1) Operator-Stationen (12, 13), Automatisierungsgeräte (3, 4) und ein Engineering-System (11) zum Erzeugen von Prozessabbildern und Anlagenbildern für die Operator-Stationen (12, 13) und zum Erzeugen von Prozessabbildern und Steuerprogrammen für die Automatisierungsgeräte (3, 4) umfasst,
**dadurch gekennzeichnet, dass** das Operator-Training-System (21) versehen ist mit
- einer Operator-Training-AG-Station (23), mittels welcher die Automatisierungsgeräte (3, 4) nachgebildet sind, und
- einer Operator-Training-OS-Station, mittels der die Operator-Stationen (12, 13) nachgebildet sind,
wobei
- die Prozessabbilder und die Anlagenbilder der Operator-Stationen (12, 13) in der Operator-Training-OS-Station (22) hinterlegt sind, wobei der Zugriff auf Prozessobjekte der Prozessabbilder mit Adressen erfolgt, die jeweils eine System-Id (30) der Operator-Training-OS-Station (22) umfassen, und
- die Prozessabbilder und die Steuerprogramme der Automatisierungsgeräte (3, 4) in der Operator-Training-AG-Station (23) hinterlegt sind, wobei die Operator-Training-AG-Station (23) zur Verarbeitung der Prozessabbilder und der Steuerprogramme Emulations-Automatisierungsgeräte aufweist, welche die Automatisierungsgeräte (3, 4) nachbilden.

2. Operator-Training-System nach Anspruch 1, **dadurch gekennzeichnet, dass** die Zugriffs-Adressen zusätzlich zur System-Id (30) der Operator-Training-OS-Station (22) jeweils eine Objekt-Id (31) für das Prozessobjekt des jeweiligen Prozessabbildes und eine Member-Id für die Ein- und Ausgänge (32) des jeweiligen Prozessabbildes aufweisen.

3. Engineering-System zum Zusammenführen von verteilten Projektierungsdaten einer Automatisierungseinrichtung für ein Operator-Training-System nach Anspruch 1 oder 2, wobei das Engineering-System (11) zum Erzeugen von Prozessabbildern und Anlagenbildern für Operator-Stationen (12, 13) und zum Erzeugen von Prozessabbildern und Steuerprogrammen für Automatisierungsgeräte (3, 4) ausgebildet ist, **dadurch gekennzeichnet, dass** das Engineering-System (11) ferner dazu ausgebildet ist,
- die Prozessabbilder und die Anlagenbilder der Operator-Stationen (12, 13) in eine Operator-Training-OS-Station (22) zu hinterlegen, mittels welcher die Operator-Stationen (12, 13) nachgebildet sind, wobei das Engineering-System (11) Zugriffsadressen auf Prozessobjekte der Prozessabbilder erzeugt, die jeweils eine System-Id (30) der Operator-Training-OS-Station (22) umfassen, und
- die Prozessabbilder und die Steuerprogramme der Automatisierungsgeräte (3, 4) in die Operator-Training-AG-Station (23) zu hinterlegen, wobei die Prozessabbilder und die Steuerprogramme zur Verarbeitung mittels Emulations-Automatisierungsgeräten der Operator-Training-AG (23) vorgesehen sind, welche die Automatisierungsgeräte (3, 4) nachbilden.

4. Engineering-System nach Anspruch 3, **dadurch gekennzeichnet, dass** das Engineering-System (11) ferner dazu ausgebildet ist, die Zugriffs-Adressen jeweils mit einer Objekt-Id (31) für jedes Prozessobjekt des jeweiligen Prozessabbildes und mit einer Member-Id für die Ein- und Ausgänge des jeweiligen Prozessabbildes (32) zu versehen.
